# EUROPEAN PATENT SPECIFICATION

(11) **EP 2 034 111 B1**
(45) Date of publication and mention of the grant of the patent: **19.10.2011**
(21) Application number: 08252708.6
(22) Date of filing: 15.08.2008
(51) Int. Cl.: E05B 29/00, E05B 9/04, H01H 27/06

(54) **Cylinder lock device**
Zylinderschloss
Dispositif de serrure à barillet

(30) Priority: 06.09.2007 JP 2007231070
(43) Date of publication of application: 11.03.2009
(73) Proprietor: Kabushiki Kaisha Honda Lock, Sadowara-cho Miyazaki-shi, Miyazaki (JP)
(72) Inventor: Miyata, Kazuhiro, Miyazaki-shi, Miyazaki (JP); Nei, Ikuhiro, Miyazaki-shi, Miyazaki 880-0293 (JP)
(74) Representative: Piésold, Alexander James

(56) References cited:
- WO-A1-99/49160
- DE-U- 7 218 524
- JP-A- 2002 106 225
- US-A- 1 951 418
- US-A- 2 046 831
- US-A- 2 440 690
- US-A- 2 679 557
- US-A- 3 522 394
- US-A- 4 956 983

## Description

### BACKGROUND OF THE INVENTION

### FIELD OF THE INVENTION

The present invention relates to a cylinder lock device in which an inner cylinder is rotated between first and second rotation positions by a key operation.

### DESCRIPTION OF THE RELATED ART

A cylinder lock device in which an inner cylinder having a key insertion hole is inserted into a cylinder body rotatably between first and second rotation positions has been known in Japanese Patent Application Laid-Open No. 2002-106225 or the like.

In such a cylinder lock device, the inner cylinder is held in the first and second rotation positions. For a reliable locking/unlocking operation by a user (for preventing poor operation), it is supposed that the inner cylinder is biased toward one of the first and second rotation positions by a return spring. In this case, with the inner cylinder being rotated toward the other of the first and second rotation positions, the inner cylinder needs to be held and controlled in the other of the first and second rotation positions so as to prevent self return of the inner cylinder toward one of the first and second rotation positions by a spring force of the return spring.

A structure of a cylinder lock device has been well known in which a tumbler is provided in an inner cylinder so as to slide between a protruding position where the tumbler protrudes from an outer periphery of the inner cylinder when a normal key is not inserted into a key insertion hole and a housed position where the tumbler is housed in the inner cylinder when the normal key is inserted, and it is supposed that the tumbler protruding from the outer periphery of the inner cylinder is abutted against and engaged with an inner periphery of a cylinder body to control the self return of the inner cylinder caused by the return spring.

In the structure in which the tumbler is used to control the self return of the inner cylinder, the tumbler protruding from the inner cylinder in the other of the first and second rotation positions is firmly abutted against the cylinder body by a spring force of the return spring, and thus when the normal key is inserted into the key insertion hole to house the tumbler in the inner cylinder, a large abutment friction force is applied between the tumbler and the cylinder body, which causes bad (heavy) feeling of insertion of the key into the key insertion hole. Also, the tumbler protrudes from the inner cylinder only by the key being removed from the key insertion hole, and thus the position of the inner cylinder has to be held by the key until the key is removed in the other of the first and second rotation positions, which is inconvenient.

DE 7218524 U discloses a cylinder lock device according to the preamble of claim 1.

### SUMMARY OF THE INVENTION

The present invention is achieved in view of such circumstances, and has an object to provide a cylinder lock device in which an inner cylinder is biased toward one of first and second rotation positions by a return spring for a reliable locking/unlocking operation by a user, and that prevents bad feeling of insertion of a key and increases convenience.

In order to achieve the object, according to the present invention, there is provided a cylinder lock device comprising: a cylinder body having a cylinder hole; an inner cylinder inserted into the cylinder hole rotatably between first and second rotation positions and axially movably between an advance position and a retracted position spaced apart from each other axially of the cylinder hole, and having a key insertion hole; a tumbler provided in the inner cylinder so as to slide along a plane perpendicular to an axis of the key insertion hole between a protruding position where the tumbler protrudes from an outer periphery of the inner cylinder when a normal key is not inserted into the key insertion hole and a housed position where the tumbler is housed in the inner cylinder when the normal key is inserted; a return spring that biases the inner cylinder to be rotated from the second rotation position to the first rotation position; biasing means for biasing the inner cylinder toward the advance position; an engaging member secured to or integrally formed with the inner cylinder; and guide and control means provided between the engaging member and the cylinder body, characterised in that the guide and control means retracts the inner cylinder from the advance position to the retracted position against a biasing force of the biasing means when the inner cylinder is rotated from the first rotation position to the second rotation position by the normal key inserted into the key insertion hole, advances the inner cylinder from the retracted position to the advance position by the biasing force of the biasing means in the second rotation position, and prevents the inner cylinder in the advance position in the second rotation position from being rotated by the spring force of the return spring from the second rotation position to the first rotation position.

According to a preferred feature of the present invention, a movement preventing portion that is engaged with and abutted against the tumbler protruding from the outer periphery of the inner cylinder in the advance position in the second rotation position to prevent retraction of the inner cylinder from the advance position toward the retracted position is provided on an inner periphery of the cylinder hole.

An ON position in an embodiment corresponds to the first rotation position in the present invention, an OFF position in the embodiment corresponds to the second rotation position in the present invention, a push spring 34 in an embodiment corresponds to the biasing means in the present invention, and a second guide protrusion 39 in a preferred embodiment corresponds to the movement preventing portion in the present invention.

According to the invention, the normal key is inserted into the key insertion hole with the inner cylinder being in the first rotation position to rotate the inner cylinder toward the second rotation position, then the guide and control means causes the inner cylinder to be retracted from the advance position to the retracted position against the biasing force of the biasing means, and advanced from the retracted position to the advance position by the biasing force of the biasing means in the second rotation position. Thus, in the advance position in the second rotation position, the inner cylinder is held in the second rotation position by the guide and control means without being rotated toward the first rotation position against a spring force of the return spring. Specifically, there is no need that the tumbler provided slidably in the inner cylinder for determining whether the key inserted into the key insertion hole is the normal key is abutted against and engaged with the cylinder body in the protruding position to hold the second rotation position. The guide and control means provided between the engaging member secured to the inner cylinder and the cylinder body receives the spring force of the return spring, and the spring force of the return spring is not applied between the tumbler and the cylinder body. This prevents bad (heavy) feeling of insertion of the key into the key insertion hole. Further, the inner cylinder is held in the second rotation position without the tumbler protruding from the inner cylinder, thus the position of the inner cylinder can be held whether the key is removed or not in the second rotation position, which increases convenience.

According to a preferred feature of the present invention, even if the inner cylinder is pushed toward the retracted position without the normal key being inserted into the key insertion hole in the second rotation position, the tumbler in the protruding position where the tumbler protrudes from the inner cylinder is abutted against and engaged with the movement preventing portion provided on the inner periphery of the cylinder hole, which prevents the inner cylinder from being retracted from the advance position to the retracted position and thus prevents the inner cylinder from being returned toward the first rotation position. Also, the tumbler for determining whether the key inserted into the key insertion hole is the normal key is used as part of a configuration for preventing retraction of the inner cylinder in such a way, which avoids an increase in the number of components.

A preferred embodiment of the present invention will be described by way of example only and with reference to the accompanying drawings.

### BRIEF DESCRIPTION OF THE DRAWINGS

FIGS. 1 to 15 show a preferred embodiment of the present invention.
FIG. 1 is an exploded perspective view showing the right side of an instrument panel of an automobile.
FIG. 2 is a view taken along an arrow 2 in FIG. 1 with an inner cylinder being rotated to an OFF position.
FIG. 3 is a view taken along an arrow 3 in FIG. 1.
FIG. 4 is a view taken along an arrow 4 in FIG. 3.
FIG. 5 is an exploded perspective view of a cylinder lock device.
FIG. 6 is an enlarged sectional view taken along a line 6-6 in FIG. 3.
FIG. 7 is an enlarged sectional view taken along a line 7-7 in FIG. 4.
FIG. 8 is an enlarged sectional view taken along a line 8-8 in FIG. 2 with the inner cylinder being pushed in the OFF position.
FIG. 9 is a perspective view of a cylinder body.
FIG. 10 is a sectional view taken along a line 10-10 in FIG. 6.
FIG. 11 is a sectional view taken along a line 11-11 in FIG. 6.
FIG. 12 is a perspective view of the inner cylinder.
FIG. 13 is an exploded perspective view of the inner cylinder and an engaging member.
FIG. 14 is a sectional view taken along a line 14-14 in FIG. 6.
FIG. 15 illustrates functions of guide and control means and guide means.

### DETAILED DESCRIPTION OF THE PREFERRED EMBODIMENT

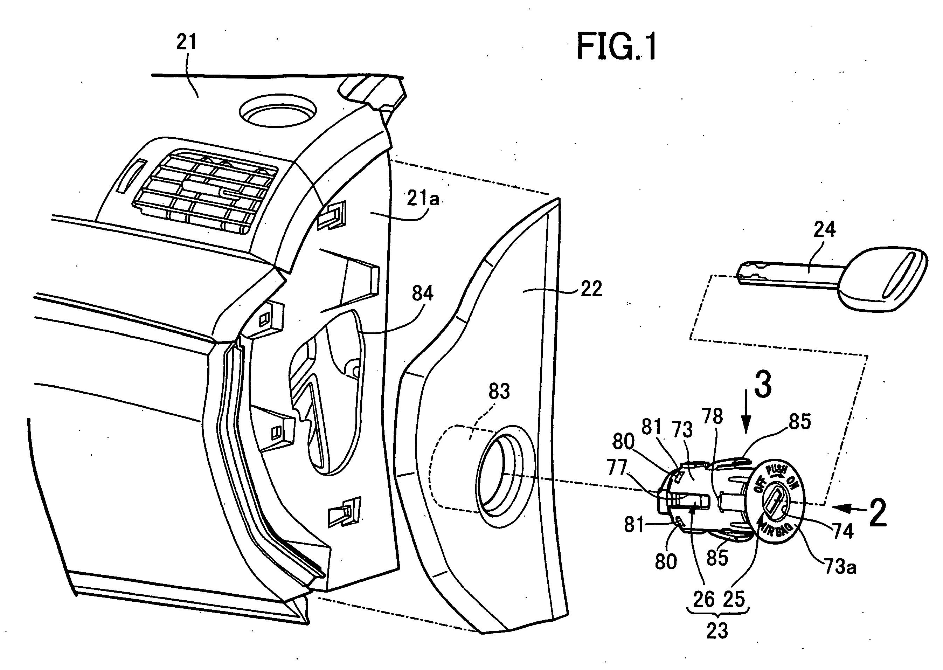

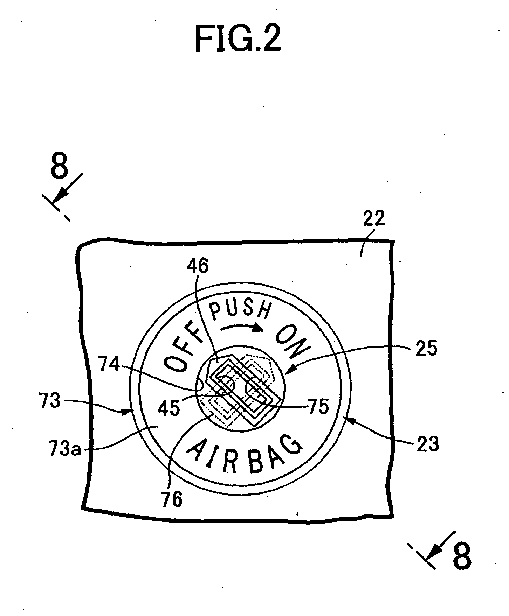

First in FIGS. 1 and 2, to a side lid 22 mounted to a right end wall 21 a of an instrument panel 21 of a left-hand drive vehicle, a cylinder lock device 23 according to a preferred embodiment of the present invention is mounted with a front end thereof facing a surface of the side lid 22. The front end of the cylinder lock device 23 is covered with a side door (not shown) on a passenger side of the vehicle by closing the side door.

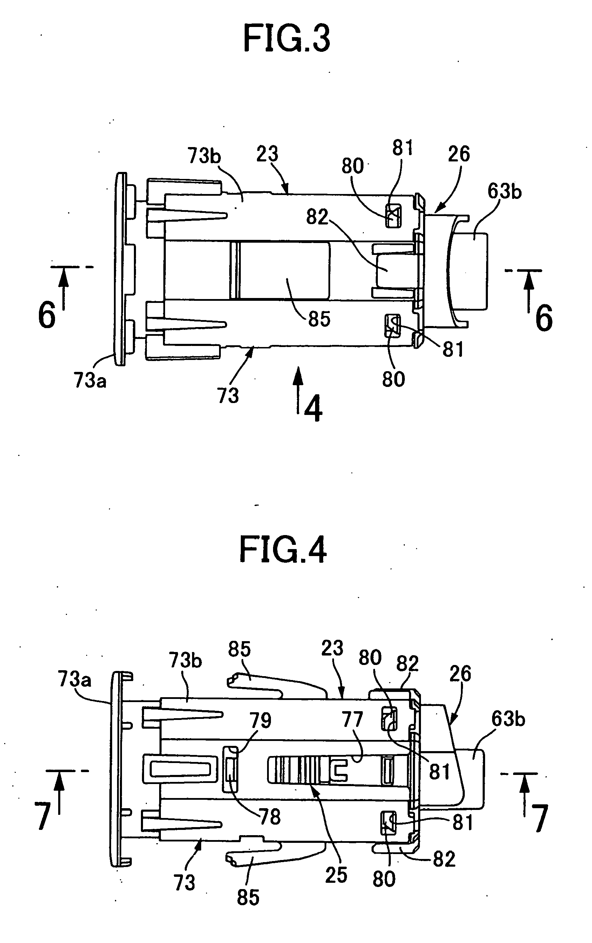

Also with reference to FIGS. 3 and 4, the cylinder lock device 23 includes a cylinder lock 25 that is rotatable between an ON position and an OFF position by a key 24 inserted therein, and a switch 26 for switching a switching mode according to a rotation operation of the cylinder lock 25. The switch 26 permits activation of a passenger side airbag (not shown) stored in a position corresponding to the passenger side of the instrument panel 21 with the cylinder lock 25 being in the ON position, and inhibits the activation of the passenger side airbag with the cylinder lock 25 being in the OFF position.

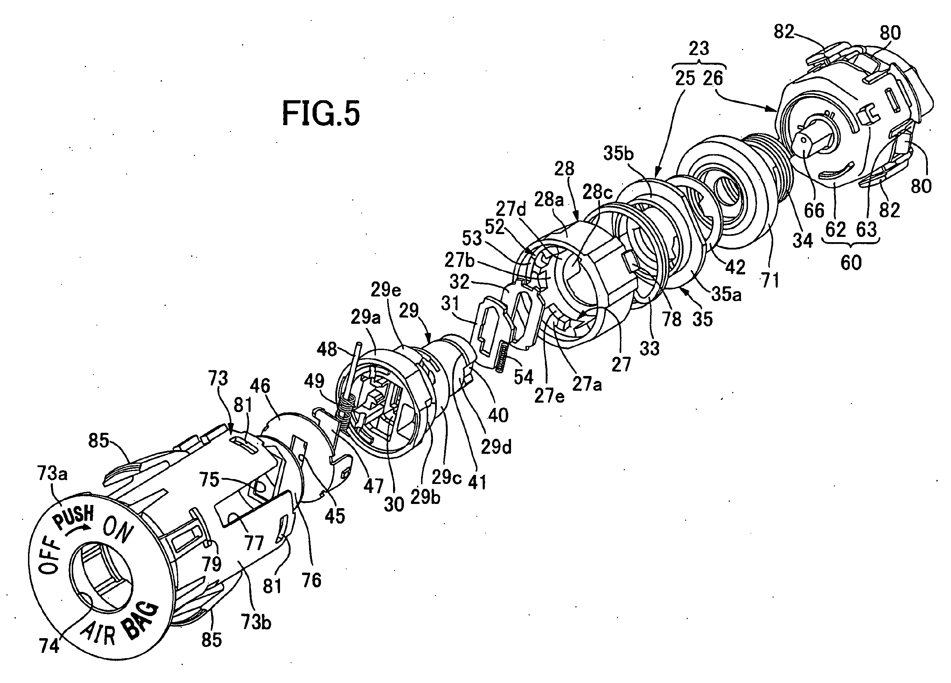

In FIGS. 5 to 8, the cylinder lock 25 includes: a cylinder body 28 having a cylinder hole 27; an inner cylinder 29 inserted into the cylinder hole 27 rotatably between the ON position and the OFF position and axially movably between an advance position and a retracted position spaced apart from each other axially of the cylinder hole 27, and having a key insertion hole 30; first and second tumblers 31 and 32 provided in the inner cylinder 29 so as to slide along a plane perpendicular to an axis of the key insertion hole 30; a return spring 33 that biases the inner cylinder 29 to be rotated from the OFF position to the ON position; a push spring 34 that biases the inner cylinder 29 toward the advance position; an engaging member 35 secured to the inner cylinder 29; and guide and control means 36 provided between the engaging member 35 and the cylinder body 28.

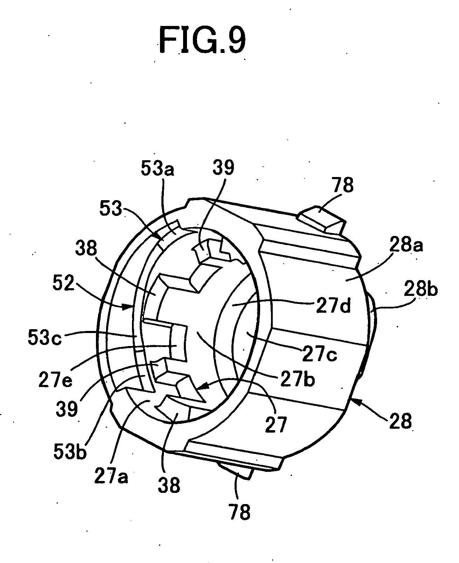

Also with reference to FIGS. 9 to 11, the cylinder body 28 integrally includes a large diameter cylinder portion 28a and a small diameter cylinder portion 28b connected to a rear end of the large diameter cylinder portion 28a, and is made of a light alloy such as a zinc alloy. The cylinder hole 27 in the cylinder body 28 includes a large diameter hole 27a with an opened front end, a middle diameter hole 27b having a smaller diameter than the large diameter hole 27a and having a front end coaxially connected to a rear end of the large diameter hole 27a, and a small diameter hole 27c having a smaller diameter than the middle diameter hole 27b and coaxially connected to a rear end of the middle diameter hole 27b. The large diameter hole 27a and the middle diameter hole 27b are provided on the side of the large diameter cylinder portion 28a, the small diameter hole 27c is provided on the side of the small diameter cylinder portion 28b, and an annular step 27d facing forward is formed between the middle diameter hole 27b and the small diameter hole 27c.

In the large diameter cylinder portion 28a of the cylinder body 28, first guide protrusions 38 protruding radially inwardly from four points circumferentially regularly spaced apart from each other on an inner periphery of the large diameter hole 27a, connected flush with an inner periphery of the middle diameter hole 27b and axially extending, and four second guide protrusions 39 protruding radially inwardly from the inner periphery of the large diameter hole 27a in the middles of the first guide protrusions 38, connected flush with the inner periphery of the middle diameter hole 27b and axially extending are integrally provided in a protruding manner. Between the large diameter hole 27a and the middle diameter hole 27b, steps 27e placed respectively between the first and second guide protrusions 38 and 39 are formed to face forward. Further, front ends of the first guide protrusions 38 are positioned to be retracted from the position of the front end of the large diameter hole 27a, front ends of the second guide protrusions 39 are positioned to be retracted from the position of the front ends of the first guide protrusions 38, and a width of each first guide protrusion 38 circumferentially of the large diameter hole 27a is larger than a width of each second guide protrusion 39.

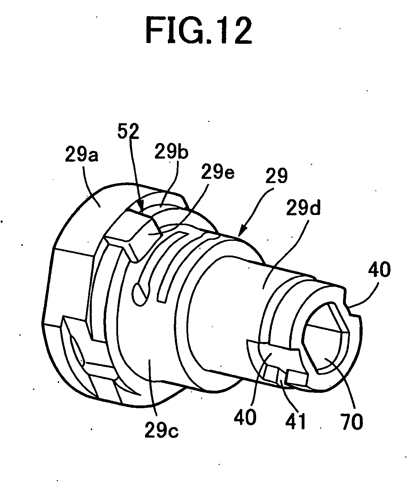

Also with reference to FIG. 12, the inner cylinder 29 integrally includes: a large diameter portion 29a having a larger diameter than the large diameter hole 27a of the cylinder hole 27 in the cylinder body 28 and placed forward of the cylinder body 28; a first middle diameter portion 29b that can fit in the large diameter hole 27a; a second middle diameter portion 29c that is slidably supported by inner peripheral surfaces of the first and second guide protrusions 38 and 39 in the cylinder body 28 and can fit in the middle diameter hole 27b of the cylinder hole 27; and a small diameter portion 29d that slidably fits in the small diameter hole 27c of the cylinder hole 27, and is made of a light alloy such as a zinc alloy. In the inner cylinder 29, the key insertion hole 30 having a rectangular section extending along a diameter line of the cylinder hole 27 is provided so as to open in a front end of the inner cylinder 29, and the key 24 can be inserted into the key insertion hole 30 from the front end of the inner cylinder 29.

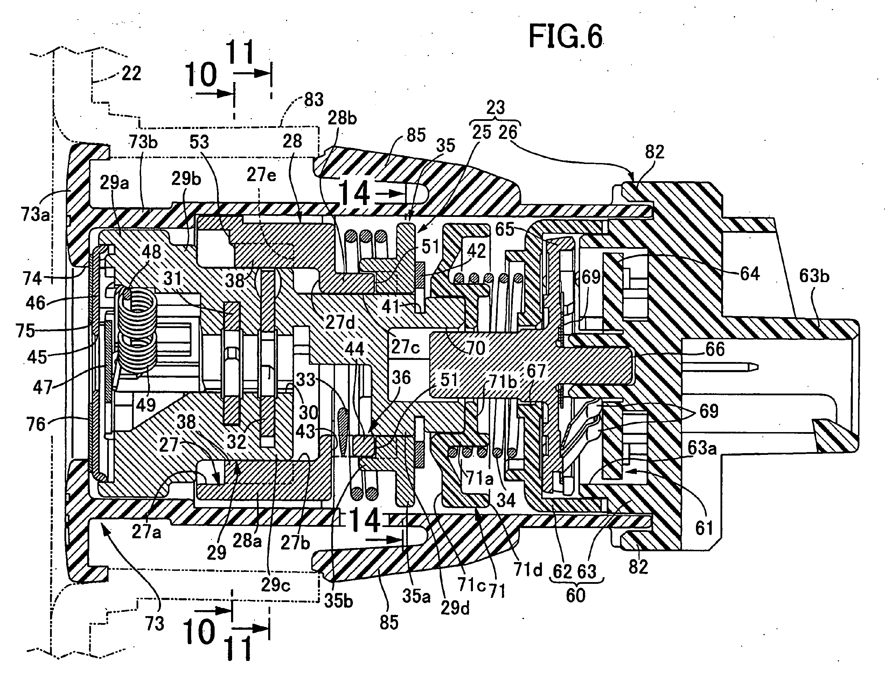

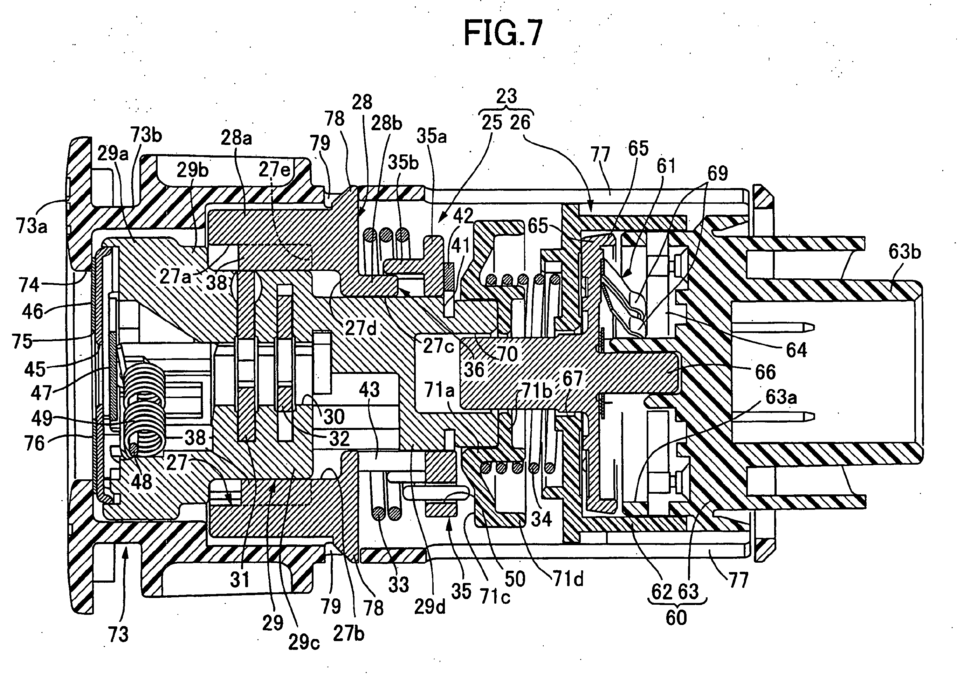

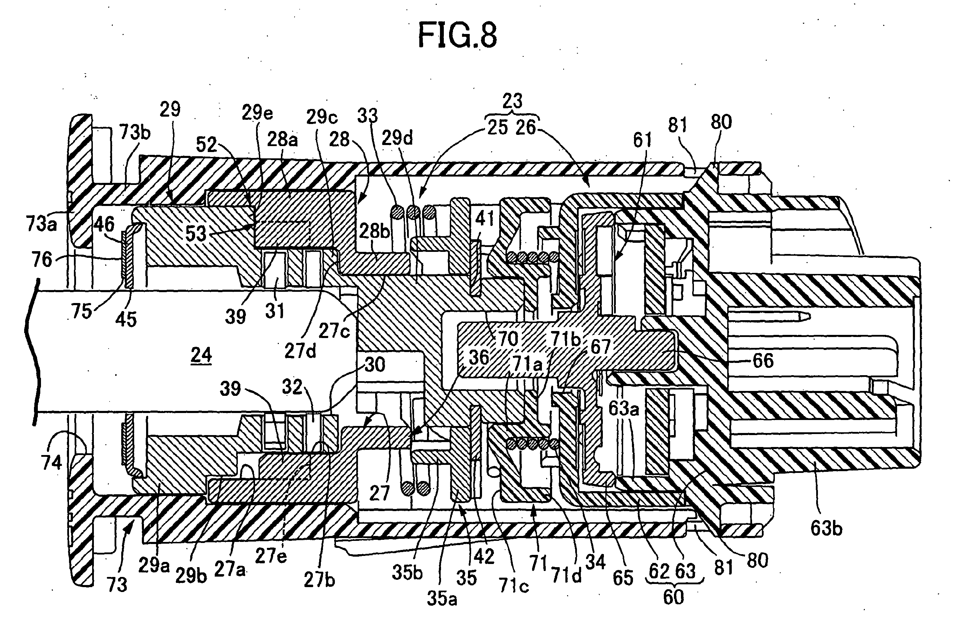

The inner cylinder 29 is inserted into the cylinder hole 27 rotatably between the ON position and the OFF position, and axially movably between the advance position (the position in FIGS. 6 and 7) and the retracted position (the position in FIG. 8) spaced apart from each other axially of the cylinder hole 27. Thus, in the advance position of the inner cylinder 29, as shown in FIGS. 6 and 7, the first middle diameter portion 29b of the inner cylinder 29 is placed to be separated forward from the large diameter hole 27a of the cylinder hole 27, the second middle diameter portion 29c is placed to be supported by the inner peripheral surfaces of the first and second guide protrusions 38 and 39 forwards of the middle diameter hole 27b of the cylinder hole 27. In the retracted position of the inner cylinder 29, as shown in FIG. 8, the first middle diameter portion 29b is placed to fit in the large diameter hole 27a of the cylinder hole 27, and the second middle diameter portion 29c is placed to partly fit in the middle diameter hole 27b of the cylinder hole 27.

To the front end of the inner cylinder 29, a cover 46 having a rectangular opening 45 corresponding to the key insertion hole 30 is mounted so as to cover the front end of the inner cylinder 29. In a front end of the key insertion hole 30, a shutter plate 47 that can cover the opening 45 from inside, a spindle 48 that rotatably supports the shutter plate 47, and a spring 49 that biases the shutter plate 47 so as to cover the opening 45 are housed, and the key 24 is inserted into the key insertion hole 30 so as to push open the shutter plate 47 with a tip thereof.

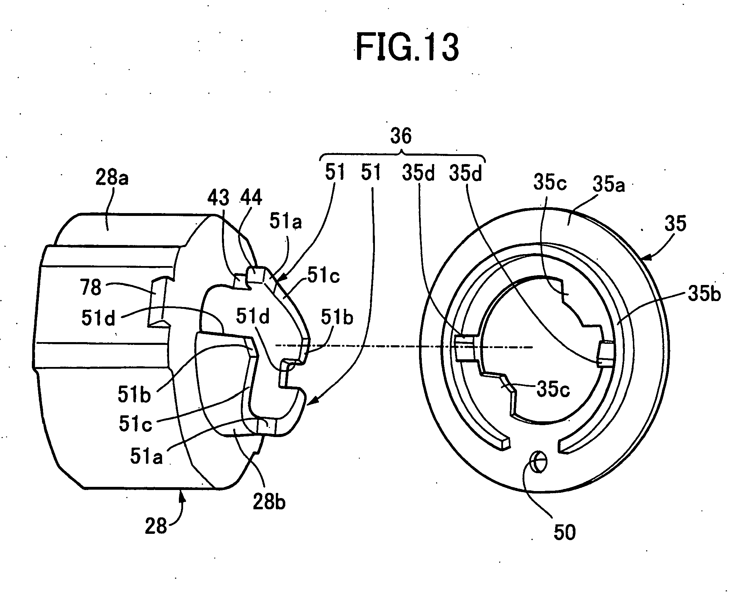

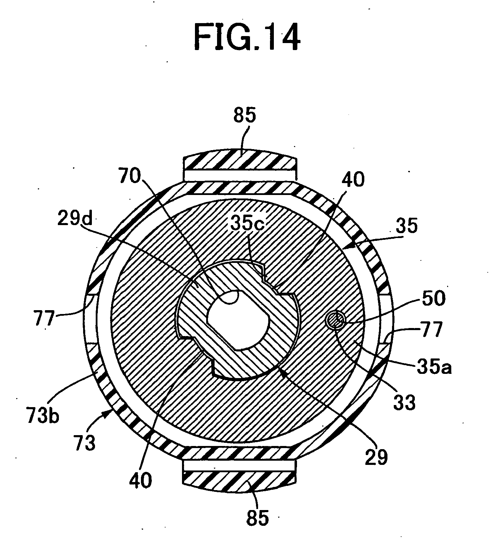

Also with reference to FIGS. 13 and 14, the small diameter portion 29d of the inner cylinder 29 protrudes rearwardly from the cylinder body 28, and the engaging member 35 is secured to a protruding portion of the small diameter portion 29d from the cylinder body 28. The engaging member 35 integrally includes: a ring plate portion 35a coaxially surrounding the small diameter portion 29d; a fitting cylinder portion 35b coaxially connected to a radially intermediate portion of the ring plate portion 35a so as to fit the small diameter cylinder portion 28b of the cylinder body 28; engaging protrusions 35c and 35c protruding radially inwardly from two points circumferentially regularly spaced apart from each other on the ring plate portion 35a; and protrusions 35d and 35d protruding from two points circumferentially regularly spaced apart from each other on the ring plate portion 35a inwardly of the fitting cylinder portion 35b, and integrally connected to portions on an inner periphery of the fitting cylinder portion 35b closer to the ring plate portion 35a.

On the other hand, in an outer periphery of the small diameter portion 29d of the inner cylinder 29, a pair of engaging recesses 40 and 40 axially extending from the rear end thereof, and an annular recess 41 formed into an annular shape so as to cross the engaging recesses 40 are provided. Thus, the small diameter portion 29d of the inner cylinder 29 is fitted into the engaging member 35 so that the engaging protrusions 35c are engaged with the engaging recesses 40 until the protrusions 35d abut against the rear end of the small diameter cylinder portion 28b of the cylinder body 28, and an E type retaining ring 42 that engages the ring plate portion 35a of the engaging member 35 from the side opposite from the small diameter cylinder portion 28b of the cylinder body 28 is fitted to the annular recess 41. Specifically, the engaging member 35 is mounted to the small diameter portion 29d of the inner cylinder 29 relatively nonrotatably and axially immovably, and secured to the small diameter portion 29d.

The return spring 33 is of a coil shape surrounding the small diameter cylinder portion 28b of the cylinder body 28 and the fitting cylinder portion 35b of the engaging member 35, and one end of the return spring 33 is engaged with the small diameter cylinder portion 28b of the cylinder body 28. Specifically, the small diameter cylinder portion 28b partly has a notch 43, and one end of the return spring 33 is engaged with one circumferential end of the notch 43. Also, a lock protrusion 44 for preventing the return spring 33 from being easily removed from the notch 43 integrally protrudes on the cylinder body 28 so as to protrude from a rear portion of one circumferential end toward the other circumferential end of the notch 43. In the ring plate portion 35a of the engaging member 35, an engaging hole 50 with which the other end of the return spring 33 is engaged is provided. Thus, the inner cylinder 29 is biased to return from the OFF position toward the ON position by the spring force exerted by the return spring 33.

The guide and control means 36 is provided between the engaging member 35 secured to the inner cylinder 29 and the rear end of the cylinder body 28, and includes the protrusions 35d and 35d integrally provided on the engaging member 35, and cams 51 and 51 formed on the rear end of the small diameter cylinder portion 28b of the cylinder body 28 and against which the protrusions 35d and 35d are abutted.

The inner cylinder 29 is biased toward the advance position by the push spring 34, and the protrusions 35d of the engaging member 35 secured to the inner cylinder 29 are biased to abut against the cams 51 formed on the cylinder body 28 placed forward of the engaging member 35.

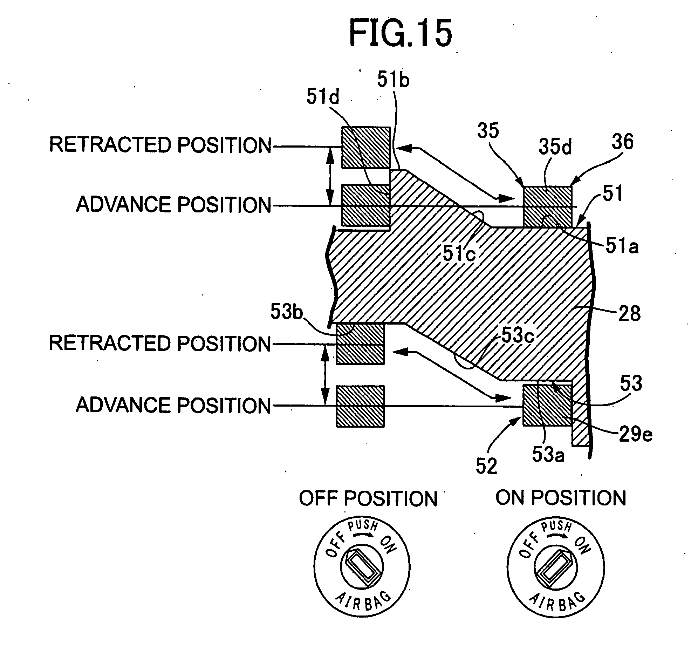

In FIG. 15, the cam 51 includes: an advance position side abutting surface 51a extending circumferentially of the cylinder body 28 and against which the protrusion 35d of the engaging member 35 it abutted with the inner cylinder 29 being in the advance position in the ON position; a retracted position side abutting surface 51b extending circumferentially of the cylinder body 28 and against which the protrusion 35d of the engaging member 35 is abutted immediately before the inner cylinder 29 reaches the OFF position in rotation of the inner cylinder 29 from the ON position to the OFF position; an inclined surface 51 c connecting between the advance position side abutting surface 51 a and the retracted position side abutting surface 51b so that the protrusion 35d is moved from the advance position side abutting surface 51a to the retracted position side abutting surface 51b against the biasing force of the push spring 34 with the rotation of the inner cylinder 29 from the ON position to the OFF position; and a control surface 51d connected perpendicularly to the retracted position side abutting surface 51b and axially extending so as to guide the movement of the inner cylinder 29 from the retracted position to the advance position by the biasing force of the push spring 34 when the inner cylinder 29 is rotated to the OFF position and control the rotation toward the OFF position when the inner cylinder 29 is moved to the advance position.

Specifically, the guide and control means 36 retracts the inner cylinder 29 from the advance position to the retracted position against the biasing force of the push spring 34 when the inner cylinder 29 is rotated from the ON position to the OFF position, advances the inner cylinder 29 from the retracted position to the advance position by the biasing force of the push spring 34 in the OFF position, and prevents the inner cylinder 29 advanced to the advance position in the OFF position from being rotated from the OFF position to the ON position.

On the other hand, between the front end portion of the cylinder body 28 and the front portion of the inner cylinder 29, guide means 52 is provided for guiding the movement of the inner cylinder 29 from the advance position to the retracted position by the guide and control means 36 when the inner cylinder 29 is rotated from the ON position to the OFF position.

The guide means 52 includes an arcuate guide surface 53 formed on the front end of the cylinder body 28 to face forward, and an abutting protrusion 29e provided in the front portion of the inner cylinder 29 so as to abut against the guide surface 53 from forward. The abutting protrusion 29e is integrally provided on the inner cylinder 29 so as to protrude radially outwardly from the first middle diameter portion 29b of the inner cylinder 29 to connect flush with an outer surface of the large diameter portion 29a of the inner cylinder 29.

The guide surface 53 includes: an advance position side abutting surface 53a extending circumferentially of the cylinder body 28 and against which the abutting protrusion 29e is abutted with the inner cylinder 29 being in the advance position in the ON position; a retracted position side abutting surface 53b extending circumferentially of the cylinder body 28 and against which the abutting protrusion 29e is abutted with the inner cylinder 29 being rotated to the OFF position and in the retracted position; and an inclined surface 53c connecting between the advance position side abutting surface 53 a and the retracted position side abutting surface 53b and against which the abutting protrusion 29e is abutted when the inner cylinder 29 is moved from the advance position to the retracted position in the rotation from the ON position to the OFF position.

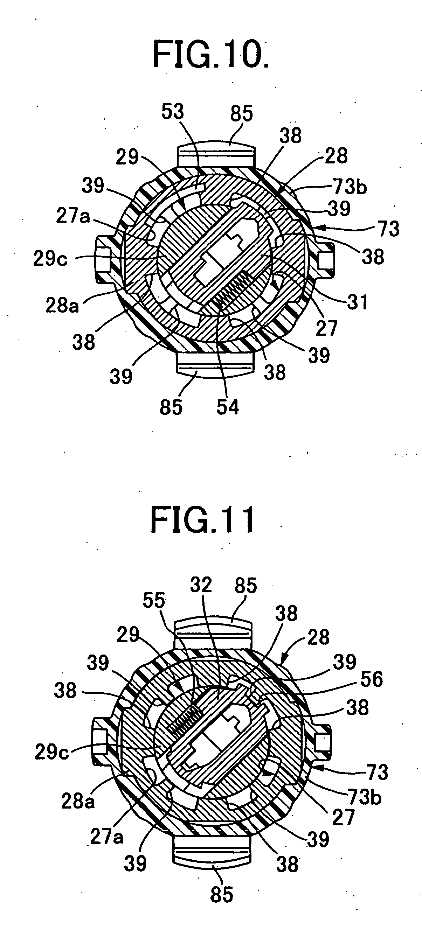

With reference to FIG. 10, the first tumbler 31 is provided in the second middle diameter portion 29c of the inner cylinder 29 slidably along the plane perpendicular to the axis of the key insertion hole 30, and between the inner cylinder 29 and the first tumbler 31, a spring 54 is provided that biases the first tumbler 31 so as to partly protrude from the outer surface of the second middle diameter portion 29c of the inner cylinder 29. Thus, when the normal key 24 is inserted into the key insertion hole 30, the first tumbler 31 is housed in the second middle diameter portion 29c of the inner cylinder 29 against a spring force of the spring 54.

The inner cylinder 29 is rotated 900 between the ON position and the OFF position, and in the ON position and the OFF position of the inner cylinder 29, the first tumbler 31 is in a circumferential position corresponding to two second guide protrusions 39 and 39 among the four second guide protrusions 39 provided on the inner periphery of the cylinder body 28. Further, the first tumbler 31 is placed forward of the second guide protrusions 39 with the inner cylinder 29 being in the advance position, and a protruding portion of the first tumbler 31 from the inner cylinder 29 faces one of the second guide protrusions 39 from forward with the inner cylinder 29 being in the advance position in the ON position and the OFF position and the first tumbler 31 partly protruding from the second middle diameter portion 29c of the inner cylinder 29 without the normal key 24 being inserted into the key insertion hole 30. Thus, even if the inner cylinder 29 is pressed from the advance position to the retracted position without the normal key 24 being inserted into the key insertion hole 30, the first tumbler 31 abuts against the second guide protrusions 39 to prevent retraction of the inner cylinder 29, and two of the four second guide protrusions 39 function as movement preventing portions that abut against the first tumbler 31 to prevent the retraction of the inner cylinder 29.

With reference to FIG. 11, the second tumbler 32 is provided in the second middle diameter portion 29c of the inner cylinder 29 behind the first tumbler 31 slidably along the plane perpendicular to the axis of the key insertion hole 30, and between the inner cylinder 29 and the second tumbler 32, a spring 55 is provided that biases the second tumbler 32 so as to partly protrude from the outer surface of the second middle diameter portion 29c of the inner cylinder 29. Thus, when the normal key 24 is inserted into the key insertion hole 30, the second tumbler 32 is housed in the second middle diameter portion 29c of the inner cylinder 29 against a spring force of the spring 55.

In the ON position and the OFF position of the inner cylinder 29, the second tumbler 32 is in a circumferential position corresponding to two second guide protrusions 39 and 39 like the first tumbler 31. Further, in a protruding portion of the second tumbler 32 from the inner cylinder 29, an engaging recess 56 with which the second guide protrusion 39 is engaged is provided, and the engaging recess 56 in the protruding portion of the second tumbler 32 from the inner cylinder 29 is placed to partly house the second guide protrusion 39 with the inner cylinder 29 being in the advance position in the ON position and the OFF position and the second tumbler 32 partly protruding from the second middle diameter portion 29c of the inner cylinder 29 without the normal key 24 being inserted into the key insertion hole 30.

With the inner cylinder 29 being in the advance position in the OFF position, the rotation of the inner cylinder 29 toward the ON position by the return spring 33 is controlled by the protrusions 35d of the guide and control means 36 abutting against the control surfaces 51d. In this case, the first and second tumblers 31 and 32 protruding from the inner cylinder 29 without the normal key 24 being inserted into the key insertion hole 30 do not abut against and engage with the second guide protrusion 39, thereby preventing the biasing force by the return spring 33 from being applied between the first and second tumblers 31 and 32 and the cylinder body 28. On the other hand, with the inner cylinder 29 being in the advance position in the ON position, when a rotating force toward the OFF position is applied to the inner cylinder 29 without the normal key 24 being inserted into the key insertion hole 30, the second guide protrusion 39 placed in the engaging recess 56 of the second tumbler 32 is abutted against and engaged with the second tumbler 32, thereby preventing the inner cylinder 29 from being rotated toward the OFF position.

In FIGS. 6 to 8, the switch 26 comprises a switch case 60 made of synthetic resin and fixedly placed behind the cylinder body 28, and a switch mechanism 61 housed in the switch case 60. The switch case 60 includes a first case member 62 made of synthetic resin and formed into a bowl shape opening rearwardly, and a second case member 63 having a cylinder portion 63a with a tip portion fitting in a rear opening end of the first case member 62, connected to each other, and a coupler 63b is formed integrally with the second case member 63.

The switch mechanism 61 includes: a ring plate shaped contact support portion 64 formed integrally with the second case member 63; a disk shaped rotation member 65 made of synthetic resin and facing the contact support portion 64 from forward; a connecting shaft 66 made of synthetic resin and which rotatably passes through a through hole 67 provided in the middle portion of the first case member 62 and has a rear portion rotatably supported by the second case member 63; a plurality of fixed contacts (not shown) provided on the contact support portion 64; and a plurality of movable contacts 69 provided on the rotation member 65 so as to switch conduction and interruption of the fixed contacts according to rotation of the rotation member 65.

The connecting shaft 66 is relatively nonrotatably connected to the rotation member 65, and in this embodiment, the connecting shaft 66 and the rotation member 65 are integrally formed.

A front end of the connecting shaft 66 is relatively nonrotatably fitted in a connecting recess 70 provided in the rear end of the inner cylinder 29 and thus connected to the inner cylinder 29, and the connecting shaft 66 and the rotation member 65 rotate with rotation of the inner cylinder 29.

The push spring 34 is made of conductive metal and formed into a coil shape. The push spring 34 is provided in a compressed manner between a spring receiving member 71 secured to the rear end of the inner cylinder 29, and the first case member 62 of the switch case 60 connected to the cylinder body 28 and thus fixedly placed behind the cylinder body 28.

The spring receiving member 71 is made of nonconductive material and integrally includes: an inner cylinder portion 71a in which the small diameter portion 29d that is the rear end of the inner cylinder 29 is fitted; an annular abutting portion 71b overhanging radially inwardly from the inner cylinder portion 71a so as to abut against the rear end surface of the inner cylinder 29; a flange 71 c overhanging radially outwardly from the inner cylinder portion 7 1 a; and an outer cylinder portion 71d connected to an outer periphery of the flange 71 c and extending toward the switch case 60. Between the first case member 62 of the switch case 60 and the flange 71 c, the push spring 34 is provided so as to surround the inner cylinder portion 71 a.

Thus, the spring receiving member 71 is biased by the push spring 34 so that the abutting portion 71b abuts against the rear end surface of the inner cylinder 29. The push spring 34 is provided between the spring receiving member 71 in which the rear end of the inner cylinder 29 is fitted, and the first case member 62 of the switch case 60 fixedly placed behind the cylinder body 28, and thus the spring receiving member 71 is substantially secured to the rear end of the inner cylinder 29.

The cylinder lock 25 and the switch 26 are connected via a housing 73 made of synthetic resin. The housing 73 is made of synthetic resin and formed into a closed-end cylindrical shape so that one end of a cylinder portion 73b is integrally connected to an end wall 73a having an opening 74 communicating with the front end of the key insertion hole 30, and the end wall 73a is formed into a ring shape so that an outer periphery thereof overhangs radially outwardly more than the outer periphery of the cylinder portion 73b. In one end of the housing 73, the cylinder body 28 of the cylinder lock 25 is fitted. To a front surface of the cover 46 having an opening 45 communicating with the front end of the key insertion hole 30 and mounted to the front end of the inner cylinder 29, a seal member 76 having an opening 75 that provides communication between the opening 45 and the opening 74 in the end wall 73a is bonded, and the seal member 76 is brought into contact with an inner surface of the end wall 73a when the inner cylinder 29 is in the advance position.

On a front surface of the end wall 73a, the ON position (ON) and the OFF position (OFF) for indicating rotation positions of the inner cylinder 29, that is, the positions of the key insertion hole 30 and the openings 45 and 75 are displayed.

In the cylinder portion 73b of the housing 73, slits 77 and 77 axially extending in a plurality of, for example, two circumferential points on the housing 73 so as to be closed at one ends and opened at the other ends in the other end of the housing 73, that is, the other end of the cylinder portion 73b, a plurality of, for example, two first engaging holes 79 and 79 placed between one ends of the slits 77 and the end wall 73a and with which first engaging protrusions 78 and 78 integrally protruding on a plurality of, for example, two points on the outer periphery of the cylinder body 28 fitted in one end of the housing 73 are resiliently engaged respectively, and a plurality of, for example, four second engaging holes 81 placed in the other end of the cylinder portion 73b between the slits 77 and with which a plurality of, for example, four second engaging protrusions 80 integrally protruding on the outer periphery of the second case member 63 of the switch case 60 at least partly fitted in the other end of the cylinder portion 73b of the housing 73 are resiliently engaged respectively.

On the other hand, in the second case member 63 that constitutes part of the switch case 60, a plurality of, for example, two opening preventing portions 82 and 82 are provided that abut from outside against an outer surface on the other end side of the housing 73, that is, the other end side of the cylinder portion 73b between the slits 77 according to the switch case 60 at least partly (in this embodiment, partly) fitting in the other end of the housing 73.

Thus, the cylinder body 28 is fitted in one end of the housing 73 from the other end of the housing 73, and secured to the housing 73 by the first engaging protrusions 78 on the cylinder body 28 being resiliently engaged with the first engaging holes 79 in the housing 73. The switch case 60 partly fitted in the other end of the housing 73 is secured to the housing 73 by the second engaging protrusions 80 being resiliently engaged with the second engaging holes 81 on the other end side of the housing 73.

For mounting the cylinder lock device 23 including the cylinder lock 25 and the switch 26 connected via the housing 73, a mounting cylinder portion 83 passing through an opening 84 provided in the right end wall 21a of the instrument panel 21 and extending inwardly of the instrument panel 21 is provided integrally with the side lid 22. Thus, as clearly shown in FIG. 6, the cylinder lock device 23 is inserted into the mounting cylinder portion 83 so that an outer peripheral portion of the end wall 73a at the front end of the cylinder lock device 23 engages a peripheral edge at an outer end of the mounting cylinder portion 83. Further, base ends of engaging arm portions 85 and 85 extending forward are integrally connected to the outer periphery of the cylinder portion 73b in the middle of the slits 77 and 77 in an axially intermediate portion of the housing 73, and tips of the arm portions 85 that are brought into slide contact with an inner surface of the mounting cylinder portion 83 and bent radially inwardly in insertion of the cylinder lock device 23 into the mounting cylinder portion 83 resiliently engage an inner end of the mounting cylinder portion 83 according to the insertion of the cylinder lock device 23 until the outer peripheral portion of the end wall 73a engages the peripheral edge at the outer end of the mounting cylinder portion 83, and thus the cylinder lock device 23 is mounted to the side lid 22.

Next, operations of the embodiment will be described. In the cylinder lock 25, the inner cylinder 29 having the key insertion hole 30 is inserted into the cylinder hole 27 rotatably between the ON position and the OFF position and axially movably between the advance position and the retracted position spaced apart from each other axially of the cylinder hole 27 in the cylinder body 28, and rotationally biased toward the ON position by the spring force of the return spring 33 and biased toward the advance position by the push spring 34. The guide and control means 36 provided between the engaging member 35 secured to the inner cylinder 29 and the cylinder body 28 retracts the inner cylinder 29 from the advance position to the retracted position against the biasing force of the push spring 34 when the inner cylinder 29 is rotated from the ON position to the OFF position by the normal key 24 inserted into the key insertion hole 30, advances the inner cylinder 29 from the retracted position to the advance position by the biasing force of the push spring 34 in the OFF position, and prevents the inner cylinder 29 in the advance position in the OFF position from being rotated from the OFF position to the ON position.

Specifically, the normal key 24 is inserted into the key insertion hole 30 to rotate the inner cylinder 29 from the ON position to the OFF position, and then the guide and control means 36 causes the inner cylinder 29 to be held in the OFF position against the spring force of the return spring 33 without being rotated toward the ON position, in the advance position in the OFF position. Thus, there is no need that the first and second tumblers 31 and 32 provided slidably in the inner cylinder 29 so as to protrude from the outer periphery of the inner cylinder 29 when the normal key 24 is not inserted into the key insertion hole 30 for determining whether the key 24 inserted into the key insertion hole 30 is the normal key 24 are abutted against and engaged with the cylinder body 28 in the protruding position to hold the OFF position of the inner cylinder 29, and the guide and control means 36 provided between the engaging member 35 secured to the inner cylinder 29 and the cylinder body 28 receives the spring force of the return spring 33. Thus, the spring force of the return spring 33 is not applied between the first and second tumblers 31 and 32 and the cylinder body 28. This prevents bad (heavy) feeling of insertion of the key 24 into the key insertion hole 30.

Further, the inner cylinder 29 is held in the OFF position without the first and second tumblers 31 and 32 protruding from the inner cylinder 29, thus the inner cylinder 29 can be held in the OFF position whether the key 24 is removed or not in the OFF position, which increases convenience.

The first tumbler 31 protruding from the outer periphery of the inner cylinder 29 in the OFF position is engaged with and abutted against one of the four second guide protrusions 39 provided on the inner periphery of the cylinder hole 27 in the cylinder body 28 to prevent retraction of the inner cylinder 29 from the advance position to the retracted position. Thus, even if the inner cylinder 29 is pushed toward the retracted position without the normal key 24 being inserted into the key insertion hole 30 in the OFF position, the inner cylinder 29 cannot be retracted from the advance position to the retracted position, and thus the inner cylinder 29 is not returned toward the ON position. Also, the first tumbler 31 for determining whether the key 24 inserted into the key insertion hole 30 is the normal key 24 is used as part of a configuration for preventing retraction of the inner cylinder 29, which prevents an increase in the number of components.

In the cylinder lock device 23, the cylinder lock 25 including the cylinder body 28 and the inner cylinder 29 inserted into the cylinder hole 27 in the cylinder body 28, and the switch 26 comprising the switch case 60 placed behind the cylinder body 28 and the switch mechanism 61 housed in the switch case 60 and interlocked with and connected to the inner cylinder 29 are connected via the housing 63. In the housing 73 made of synthetic resin, formed into a closed-end cylindrical shape and having the end wall 73a at one end, there are provided the plurality of first engaging holes 79 with which the first engaging protrusions 78 integrally protruding on the plurality of points on the outer periphery of the cylinder body 28 fitted in one end of the housing 73 are resiliently engaged respectively, and the plurality of second engaging holes 81 with which the plurality of second engaging protrusions 80 integrally protruding on the outer periphery of the second case member 63 that constitutes part of the switch case 60 at least partly fitted in the other end of the housing 73 are resiliently engaged respectively. Thus, the cylinder body 28 fitted in one end of the housing 73 is secured to the housing 73, and the switch case 60 at least partly fitted in the other end of the housing 73 is secured to the other end of the housing 73, thereby increasing connection rigidity between the switch case 60 and the cylinder body 28.

Further, in the housing 73, the slits 77 axially extending in the plurality of circumferential points on the housing 73 so as to be closed at one ends and opened at the other ends into the other end of the housing 73 are provided, and the first engaging holes 79 are placed between one ends of the slits 77 and the end wall 73a, and thus the first engaging protrusions 78 are brought into contact with the inner surface of the housing 73 only in a short range, at the one ends of the slits 77 and the first engaging holes 79, when the cylinder body 28 is fitted in the housing 73 from the other end side. The plurality of second engaging holes 81 with which the second engaging protrusions 80 on the outer periphery of the switch case 60 are resiliently engaged respectively are placed in the other end of the housing 73 between the slits 77, and thus the second engaging protrusions 80 are also brought into contact with the inner surface of the housing 73 only in a short range when the switch case 60 is at least partly fitted in the other end of the housing 73. Specifically, when the cylinder lock 25 and the switch 26 are connected via the housing 73, the first engaging protrusions 78 and the second engaging protrusions 80 are brought into contact with the inner surface of the housing 73 in a short distance to improve an assemblability.

The plurality of slits 77 are provided, thus the other end of the housing 73 is easily opened radially outward on opposite sides of the slits 77, and the other end of the housing 73 may be warped radially outwardly on the opposite sides of the slits 77 in forming the housing 73. However, in the switch case 60, the plurality of opening preventing portions 82 are provided that abut from outside against the outer surface on the other end side of the housing 73 between the slits 77 according to the switch case 60 at least partly fitting in the other end of the housing 73. Thus, even if an external force is applied to the switch case 60, the engagement and securing of the switch case 60 with and to the housing 73 is not easily released. Further, the opening preventing portions 82 are integrally provided in the second case member 63 that constitutes part of the switch case 60, thereby eliminating the need for components intended for preventing opening and preventing an increase in the number of components.

To the rear end of the inner cylinder 29, the spring receiving member 71 made of nonconductive material is secured, and the spring receiving member 71 integrally includes the inner cylinder portion 71a in which the rear end of the inner cylinder 29 is fitted, the annular abutting portion 71b overhanging radially inwardly from the inner cylinder portion 71a so as to abut against the rear end surface of the inner cylinder 29, the flange 71c overhanging radially outwardly from the inner cylinder portion 71 a, and the outer cylinder portion 71 d connected to the outer periphery of the flange 71c and extending toward the switch case 60, and the push spring 34 is provided in a compressed manner between the flange 71c and the switch case 60. Thus, a long creepage distance of the spring receiving member 71 can be obtained between the inner cylinder 29 made of metal and the push spring 34 made of metal, thereby preventing static electricity from passing from the inner cylinder 29 to the push spring 34, and thus preventing a high voltage from being applied to the switch mechanism 61 and a control unit that receives signals from the switch mechanism 61. Further, the rear end of the inner cylinder 29 is covered with the abutting portion 71b of the spring receiving member 71, thereby preventing electrical discharge from the rear end of the inner cylinder 29 through a space toward the switch case 60.

A preferred embodiment of the present invention has been described, but the present invention is not limited to this embodiment, and various design choices may be made without departing from the present invention described in claims.

For example, in the embodiment, the engaging member 35 separate from the inner cylinder 29 is secured to the inner cylinder 29, but the inner cylinder 29 and the engaging member 35 may be integrally formed.

In the embodiment, the cylinder lock device 23 includes the cylinder lock 25 that is rotatable between the ON position and the OFF position, and the switch 26 for switching the switching mode according to the rotation operation of the cylinder lock 25. However, an activation mechanism in place of the switch mechanism may be applied to be activated according to the rotation operation of the cylinder lock 25.

## Claims

1. A cylinder lock device comprising:
a cylinder body (28) having a cylinder hole (27);
an inner cylinder (29) inserted into the cylinder hole (27) rotatably between first and second rotation positions and axially movably between an advance position and a retracted position spaced apart from each other axially of the cylinder hole (27), and having a key insertion hole (30);
a tumbler (31, 32) provided in the inner cylinder (29) so as to slide along a plane perpendicular to an axis of the key insertion hole (30) between a protruding position where the tumbler protrudes from an outer periphery of the inner cylinder (29) when a normal key (24) is not inserted into the key insertion hole (30) and a housed position where the tumbler is housed in the inner cylinder (29) when the normal key (24) is inserted;
a return spring (33) that biases the inner cylinder (29) to be rotated from the second rotation position to the first rotation position;
biasing means (34) for biasing the inner cylinder (29) toward the advance position;
an engaging member (35) secured to or integrally formed with the inner cylinder (29); and
guide and control means (36) provided between the engaging member (35) and the cylinder body (28),
**characterised in that** the guide and control means (36) retracts the inner cylinder (29) from the advance position to the retracted position against a biasing force of the biasing means (34) when the inner cylinder (29) is rotated from the first rotation position to the second rotation position by the normal key (24) inserted into the key insertion hole (30), advances the inner cylinder (29) from the retracted position to the advance position by the biasing force of the biasing means (34) in the second rotation position, and prevents the inner cylinder (29) in the advance position in the second rotation position from being rotated by the spring force of the return spring (33) from the second rotation position to the first rotation position.

2. The cylinder lock device according to claim 1, wherein a movement preventing portion (39) that is engaged with and abutted against the tumbler (31) protruding from the outer periphery of the inner cylinder (29) in the advance position in the second rotation position to prevent retraction of the inner cylinder (29) from the advance position toward the retracted position is provided on an inner periphery of the cylinder hole (27).

## Patentansprüche

1. Zylinderschlossvorrichtung, umfassend:
- einen Zylinderkörper (28) mit einem Zylinderloch (27),
- einen Innenzylinder (29), welcher drehbar zwischen einer ersten und einer zweiten Drehposition und axial beweglich zwischen einer Vorrückposition und einer zurückgezogenen Position, die voneinander in axialer Richtung des Zylinderlochs (27) mit Abstand angeordnet sind, in das Zylinderloch (27) eingeführt ist und ein Schlüssel-Einführungsloch (30) aufweist,
- eine Zuhaltung (31, 32), die in dem Innenzylinder (29) bereitgestellt ist, um entlang einer zu einer Achse des Schlüssel-Einführungslochs (30) orthogonalen Ebene zu gleiten, zwischen einer vorstehenden Position, in welcher die Zuhaltung von einem Außenumfang des Innenzylinders (29) vorsteht, wenn kein normaler Schlüssel (24) in das Schlüssel-Einführungsloch (30) eingeführt ist, und einer aufgenommenen Position, in welcher die Zuhaltung in dem Innenzylinder (29) aufgenommen ist, wenn der normale Schlüssel (24) eingeführt ist,
- eine Rückstellfeder (33), welche den Innenzylinder (29) vorspannt, um von der zweiten Drehposition zu der ersten Drehposition gedreht zu werden,
- Vorspannmittel (34) zum Vorspannen des Innenzylinders (29) zu der Vorrückposition hin,
- ein Eingriffselement (35), welches an dem Innenzylinder (29) gesichert oder integral damit gebildet ist, und
- Führungs- und Regelungs-/Steuerungs-Mittel (36), die zwischen dem Eingriffselement (35) und dem Zylinderkörper (28) bereitgestellt sind,
**dadurch gekennzeichnet, dass** die Führungs- und Regelungs-/Steuerungs-Mittel (36):
- den Innenzylinder (29) von der Vorrückposition zu der zurückgezogen Position gegen eine Vorspannkraft der Vorspannmittel (34) zurückziehen, wenn der Innenzylinder (29) von der ersten Drehposition zu der zweiten Drehposition durch den normalen Schlüssel (24), der in das Schlüssel-Einführungsloch (30) eingeführt ist, gedreht wird,
- den Innenzylinder (29) von der zurückgezogen Position in die Vorrückposition durch die Vorspannkraft der Vorspannmittel (34) in der zweiten Drehposition vorrücken und
- den Innenzylinder (29) in der Vorrückposition in der zweiten Drehposition daran hindern, durch die Federkraft der Rückstellfeder (33) von der zweiten Drehposition zu der ersten Drehposition gedreht zu werden.

2. Zylinderschlossvorrichtung nach Anspruch 1, wobei ein Bewegungsverhinderungsabschnitt (39), der mit der Zuhaltung (31) in Eingriff steht und gegen diese anliegt, welche von dem Außenumfang des Innenzylinders (29) in der Vorrückposition in der zweiten Drehposition vorsteht, um einen Rückzug des Innenzylinders (29) von der Vorrückposition zu der zurückgezogenen Position hin zu verhindern, an einem Innenumfang des Zylinderlochs (27) bereitgestellt ist.

## Revendications

1. Dispositif de serrure à barillet comprenant :
un corps de barillet (28) ayant un trou de barillet (27) ;
un barillet interne (29) inséré dans le trou de barillet (27) de manière rotative entre des première et deuxième positions de rotation et de manière axialement mobile entre une position d'avancement et une position rétractée espacées l'une de l'autre de manière axiale par rapport au trou de barillet (27) et ayant un trou d'insertion de clé (30) ;
un tumbleur (31, 32) prévu dans le barillet interne (29) afin de coulisser le long d'un plan perpendiculaire à un axe du trou d'insertion de clé (30) entre une position en saillie dans laquelle le tumbler fait saillie d'une périphérie externe du barillet interne (29) lorsqu'une clé normale (24) n'est pas insérée dans le trou d'insertion de clé (30) et une position logée dans laquelle le tumbler est logé dans le barillet interne (29) lorsque la clé normale (24) est insérée ;
un ressort de rappel (33) qui sollicite le barillet interne (29) à tourner de la deuxième position de rotation à la première position de rotation ;
des moyens de sollicitation (34) pour solliciter le barillet interne (29) vers la position d'avancement ;
un élément de mise en prise (35) fixé sur ou formé de manière solidaire avec le barillet interne (29) ; et
des moyens de guidage et de contrôle (36) prévus entre l'élément de mise en prise (35) et le corps de barillet (28),
**caractérisé en ce que** les moyens de guidage de contrôle (36) rétractent le barillet interne (29) de la position d'avancement à la position rétractée contre une force de sollicitation des moyens de sollicitation (34) lorsque le barillet interne (29) est entraîné en rotation de la première position de rotation à la deuxième position de rotation par la clé normale (24) insérée dans le trou d'insertion de clé (30), fait avancer le barillet interne (29) de la position rétractée à la position d'avancement par la force de sollicitation des moyens de sollicitation (34) dans la deuxième position de rotation et empêche le barillet interne (29) dans la position d'avancement dans la deuxième position de rotation d'être entraîné en rotation par la force de ressort du ressort de rappel (33) de la deuxième position de rotation à la première position de rotation.

2. Dispositif de serrure à barillet selon la revendication 1, dans lequel une partie anti-mouvement (39) qui est mise en prise avec et vient en butée contre le tumbler (31) faisant saillie de la périphérie externe du barillet interne (29) dans la position d'avancement dans la deuxième position de rotation pour empêcher la rétraction du barillet interne (29) de la position d'avancement vers la position rétractée, est prévue sur une périphérie interne du trou de barillet (27).
